(19) Europäisches Patentamt
European Patent Office
Office européen des brevets

(11) EP 2 437 494 B1

(12) EUROPEAN PATENT SPECIFICATION

(45) Date of publication and mention of the grant of the patent:
**11.10.2017 Bulletin 2017/41**

(21) Application number: **10780226.6**

(22) Date of filing: **20.05.2010**

(51) Int Cl.:
***H04N 7/18*** (2006.01) ***B60R 1/00*** (2006.01)
***G08G 1/16*** (2006.01) ***G06T 3/40*** (2006.01)

(86) International application number:
**PCT/JP2010/003405**

(87) International publication number:
**WO 2010/137265 (02.12.2010 Gazette 2010/48)**

# (54) DEVICE FOR MONITORING AREA AROUND VEHICLE

VORRICHTUNG ZUR ÜBERWACHUNG DER UMGEBUNG RUND UM EIN FAHRZEUG

DISPOSITIF DE SURVEILLANCE D'UNE ZONE AUTOUR D'UN VÉHICULE

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **25.05.2009 JP 2009124877**

(43) Date of publication of application:
**04.04.2012 Bulletin 2012/14**

(73) Proprietor: **Panasonic Intellectual Property Management Co., Ltd.**
**Osaka-shi, Osaka 540-6207 (JP)**

(72) Inventors:
- **MOCHIZUKI, Ryo**
**Chuo-ku**
**Osaka 540-6207 (JP)**
- **OKAMOTO, Shusaku**
**Chuo-ku**
**Osaka 540-6207 (JP)**

(74) Representative: **Grünecker Patent- und Rechtsanwälte**
**PartG mbB**
**Leopoldstraße 4**
**80802 München (DE)**

(56) References cited:
**JP-A- 2005 167 309**
**JP-A- 2007 274 377**
**JP-A- 2008 048 317**

- **GAO YINGHUI ET AL: "A STITCHING ALGORITHM OF REMOTE SENSING IMAGES FROM AVIATION SWAYING CAMERA", OPTOMECHATRONIC MICRO/NANO DEVICES AND COMPONENTS III : 8 - 10 OCTOBER 2007, LAUSANNE, SWITZERLAND, vol. 5985, 17 October 2005 (2005-10-17), pages 1-5, XP002525675,**
- **RAN SONG ET AL: "Fast Mosaic of High-Resolution Multiple-View Images of Surfaces from Architectural and Heritage Structures", AUTOMATION AND LOGISTICS, 2007 IEEE INTERNATIONAL CONFERENCE ON, IEEE, USA, 1 August 2007 (2007-08-01), pages 2270-2275, XP031139161,**
- **SZELISKI R: "Video mosaics for virtual environments", IEEE COMPUTER GRAPHICS AND APPLICATIONS, IEEE, US, 1 March 1996 (1996-03-01), pages 22-30, XP002327206,**
- **CHIA-WEN LIN ET AL: "Realtime object extraction and tracking with an active camera using image mosaics", PROCEEDINGS OF THE 2003 IEEE RADAR CONFERENCE. HUNTSVILLE, AL, MAY 5 - 8, 2003, 9 December 2002 (2002-12-09), pages 149-152, XP010642534,**
- **HUGHES C ET AL: "Wide-angle camera technology for automotive applications: a review", IET INTELLIGENT TRANSPORT SYSTEMS, vol. 3, no. 1, 9 March 2009 (2009-03-09), pages 19-31, XP006032372,**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



(Cont. next page)

- CHUN-CHE WANG ET AL: "Driver Assistance System for Lane Detection and Vehicle Recognition with Night Vision", 2005 IEEE/RSJ INTERNATIONAL CONFERENCE ON INTELLIGENT ROBOTS AND SYSTEMS; EDMONTON, AB, CANADA; 2 - 6 AUGUST 2005, IEEE, USA, 2 August 2005 (2005-08-02), pages 3314-3319, XP010857578,

## Description

Technical Field

The present invention relates to a vehicle surrounding monitoring apparatus which is mounted on a vehicle and which synthesizes a plurality of captured images around the vehicle and provide a synthetic image to a driver.

Background Art

For example, Patent Literature 1 discloses a conventional vehicle surrounding monitoring apparatus. This apparatus applies processing to images of the vehicle surrounding captured through wide-angle lenses of a plurality of car-mounted cameras (hereinafter, car-mounted cameras will be simply referred to as "cameras") arranged such that the image capturing ranges partially overlap. According to this processing, captured images are converted into overhead images showing an object on a street seen from a driver's view point or a view point from above. The overhead images generated by conversion are displayed on a monitor to present to passengers of the vehicle, particularly, the driver.

The vehicle surrounding monitoring apparatus of this type generally converts a plurality of images captured by a plurality of cameras attached at different positions, into a plurality of overhead images and synthesizes a plurality of these overhead images to generate a synthetic image. When overhead images are synthesized, a method of determining the brightness of pixels by assigning weights to and adding pixels of respective overhead images in overlapping areas, is known as one of image processing methods for overlapping areas. More specifically, the brightness (p) of the target pixels is defined according to following equations 1 and 2 based on brightnesses (p1 and p2) and weights (w1 and w2) of respective overhead images in which overlapping areas are formed.

$$p = p1 \times w1 + p2 \times w2 \ ... \ \text{(Equation 1)}$$

$$w1 + w2 = 1 \ ... \ \text{(Equation 2)}$$

Patent Literature 2 proposes a method of determining a weight of target pixels according to the distance between a camera and a point corresponding to the target pixels. Hence, an image closer to the camera is preferentially used in the overlapping area, so that it is possible to generate an image of little deterioration of image quality.

"A stitching algorithm of remote sensing images from aviation swaying camera" by Gao Yinghui et al. (Optomechatronic Micro/Nano Devices and Components III, Proc. of SPIE, Vol. 5985, 59852L, 2005) relates to fusing a collection of images taken by an aviation swaying camera. Geometric distortions of the images due to rotation of the camera and projection effects due to the swaying are corrected. Optimal matching areas of the images are determined and stitching the images together uses linear stitching weights.

"Fast Mosaic of High-Resolution Multiple-View Images of Surfaces from Architectural and Heritage Structures" by Ran Song et al. (International Conference on Automation and Logistics, Proc. of the IEEE 2007, Jinan, China) relates to creating mosaics from images captured by an aerial imaging system. Correction of lens distortions is performed. Interest points in the images are detected by the scale- and rotation-invariant Speeded Up Robust Features (SURF) algorithm and used to determine transformation matrices for image alignment. Image combination uses a weighted average of the overlap regions.

"Video mosaics for virtual environments" by R. Szelski (IEEE Computer Graphics and Applications, 1996) relates to combining individual images of a video image to a panorama mosaic image. Pairs of images are aligned by minimizing intensity discrepancy and combined using a weighted average.

"Realtime object extraction and tracking with an active camera using image mosaics" by C.-W. Lin et al. (Proc. of the 2003 IEEE Radar Conference) relates to object extraction and object tracking. A panoramic background mosaic image is constructed from a number of background images taken in advance. Background images are aligned by minimizing an error function in the overlapping regions and blended using an exponential weighting function. After background subtraction of video images, an intruding object is detected and tracked, potentially using a moving camera following a feature point.

Citation List

Patent Literature

PTL 1
Japanese Patent Application Laid-Open No. 2005-167309
PTL 2
Japanese Patent Application Laid-Open No. 2007-274377
PTL 3
Japanese Patent Publication No. 3286306

Summary of Invention

Technical Problem

However, distortion of a three-dimensional object included in overhead images has to do with the view point set to generate overhead images, a projection plane and a state (position and orientation) where cameras which actually capture images are attached to a vehicle. Therefore, if these pieces of information are not quantized, the magnitude of distortion cannot be taken into account only based on the distance between the camera and a point corresponding to target pixels. That is, when weighting is performed based on an actual distance between the camera and point corresponding to the target pixels as disclosed in Patent Literature 2, while roughness of the pixels is taken into account in the weight for synthesis, the magnitude of distortion of a captured three-dimensional object cannot be taken into account and pixels of an overhead image including greater distortion is preferentially used (for example, with a greater weight).

It is therefore an object of the present invention to provide a vehicle surrounding monitoring apparatus which can reduce distortion of a three-dimensional object appearing in a synthetic image when an output image of a monitor is obtained by synthesizing overhead images based on images captured by a plurality of cameras.

Solution to Problem

This is achieved by the features of the independent claims.

Advantageous Effects of Invention

According to the present invention, it is possible to reduce distortion of a three-dimensional object appearing in a synthetic image when an output image of a monitor is obtained by synthesizing overhead images based on images captured by a plurality of cameras.

Brief Description of Drawings

FIG.1 is a view illustrating an entire configuration of a vehicle surrounding monitoring apparatus according to Embodiment 1 of the present invention;
FIG.2 is a view illustrating an example of positions to attach cameras to a vehicle body according to Embodiment 1 of the present invention;
FIG.3 is a view illustrating an example of an image captured by each camera illustrated in FIG.2;
FIG.4 is a view illustrating an example of a plurality of overhead images having overlapping areas and obtained from the captured images illustrated in FIG.3;
FIG.5 is a view illustrating an example of synthesizing the overhead images illustrated in FIG.4;
FIG.6 is a view illustrating a generation example of overhead images by mapping according to Embodiment 1 of the present invention;
FIG.7 is a view illustrating synthesis example of overhead images by weighting according to Embodiment 1 of the present invention;
FIG.8A is a view illustrating an example representing a blend ratio table determined for one of two overhead images of synthesis targets, using numerical values according to Embodiment 1 of the present invention;
FIG.8B is a view illustrating an example representing a blend ratio table determined for the other one of two overhead images of synthesis targets, using numerical values according to Embodiment 1 of the present invention;

FIG.9A is a view illustrating a weighting/synthesis example of a front right overlapping area of the vehicle;

FIG.9B is a view illustrating an example of a state where a camera on a front side of the vehicle looks down on a three-dimensional object;

FIG.9C is a view illustrating an example of a state where a camera on a right side of the vehicle looks down on a three-dimensional object;

FIG.10 is a view for describing an angle at which each camera looks down on the position on the ground of a point corresponding to pixels of synthesis targets according to Embodiment 1 of the present invention;

FIG.11 is a view for describing an angle at which each camera looks down on the position at a predetermined height from the ground of a point corresponding to pixels of synthesis targets according to Embodiment 1 of the present invention;

FIG.12 is a flowchart illustrating an operation of generating overhead images from camera images according to Embodiment 1 of the present invention;

FIG.13 is a flowchart illustrating an operation of generating an output image from overhead images according to Embodiment 1 of the present invention;

FIG.14 is a view illustrating a planar projection area and curved projection area for describing a three-dimensional space model according to Embodiment 2 of the present invention;

FIG.15 is a view schematically illustrating a cross section of the three-dimensional space model according to Embodiment 2 of the present invention;

FIG.16 is a view illustrating an example where a captured image is mapped on the three-dimensional space model according to Embodiment 2 of the present invention;

FIG.17 is a view for describing an effect which has to do with a stretch of the three-dimensional object in an output image according to Embodiment 2 of the present invention; and

FIG.18 is a view for describing an effect which has to do with the field of view of an output image according to Embodiment 2 of the present invention.

Description of Embodiments

Hereinafter, embodiments of the present invention will be described with reference to the drawings.

(Embodiment 1)

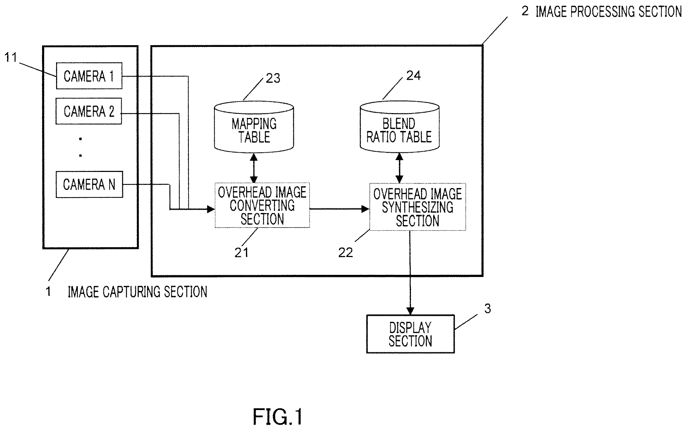

FIG.1 is a block diagram illustrating the entire configuration of a vehicle surrounding monitoring apparatus according to Embodiment 1 of the present invention. Image capturing section 1 has as an image capturing section a plurality of (N) cameras 11 of a color or monochrome type having solid-state imaging elements such as CCDs or CMOS devices. A plurality of these cameras 11 are each set in the vehicle and used, and configured to capture images of a wide range by means of lenses of a wide view angle such as fish-eye lenses.

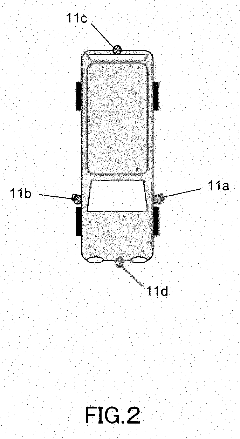

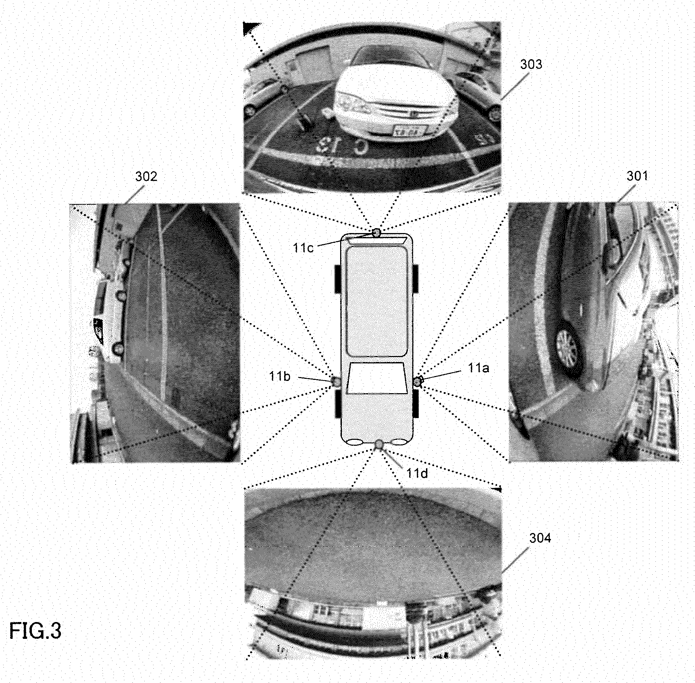

FIG.2 illustrates an example where four cameras 11a to 11d are set at the vehicle to allow images of the entire surrounding of the vehicle to be visually checked. With this example, cameras 11a and 11b are set at side mirrors on the both sides of the vehicle, camera 11c is set at the back of the vehicle and camera 11d is set near a bumper at the front of the vehicle. Images which are actually captured by cameras 11a to 11d are images 301, 302, 303 and 304 as illustrated in FIG.3.

In addition, although four cameras are set with the present embodiment, the number of cameras to set is by no means limited to four and may be two or more. Further, although cameras are set at the positions of the front, back, left and right of the vehicle with the present embodiment, these cameras may be set at random positions as long as they can adequately capture images around the vehicle (not necessarily the entire surrounding).

Image processing section 2 receives as input the captured image (hereinafter, also referred to as "camera image") from each camera 11, processes these captured images and outputs the processed images to display section 3. This processing is directed to performing an arithmetic operation of creating view point conversion images and synthesizing illustration images and overhead images.

That is, image processing section 2 has as an acquiring section as an interface (not illustrated) which is connected to each camera 11 to acquire data showing camera images. Further, the above arithmetic operation in image processing section 2 is realized by a configuration including a computer such as a CPU (Central Processing Unit) which executes a program for the above arithmetic operation and a storage apparatus which stores information such as a table required for the above arithmetic operation. The vehicle surrounding monitoring apparatus according to the present embodiment mainly has image processing section 2.

For display section 3, a display device such as a liquid crystal display or plasma display is used. Meanwhile, the display is used in combination with a vehicle-mounted GPS (Global Positioning System) terminal display (so-called car navigation system display).

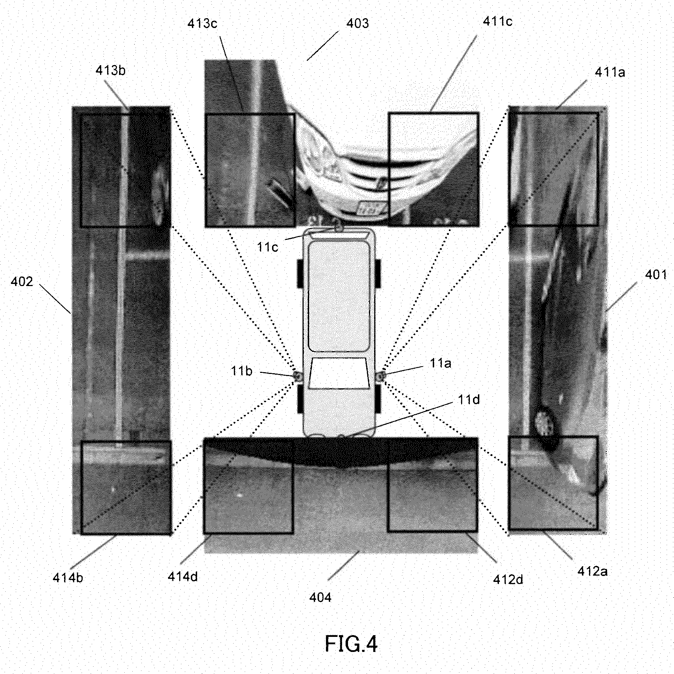

Overhead image converting section 21 which is a converting section performs signal processing of converting camera images taken in from cameras 11 into images which look down on the ground as the projection plane from a specified virtual view point. The overhead image is, for example, an image which vertically looks down on the ground from a virtual view point position. Processing of converting the camera image into the overhead image seen from the virtual view point is performed referring to mapping table 23. Mapping table 23 defines the correspondence between an input (a pixel coordinate of a camera image) and an output (a pixel coordinate of an overhead image) in advance, and will be described below. When generating an overhead image, overhead image converting section 21 acquires a brightness value of each pixel of the overhead image from pixels of a corresponding camera image. There is a plurality of camera inputs with the present embodiment, and therefore overhead image conversion processing is performed separately for each camera image. FIG.4 is an example where camera images 301, 302, 303 and 304 in FIG.3 are converted into overhead images 401, 402, 403 and 404 which look down on the vehicle from above.

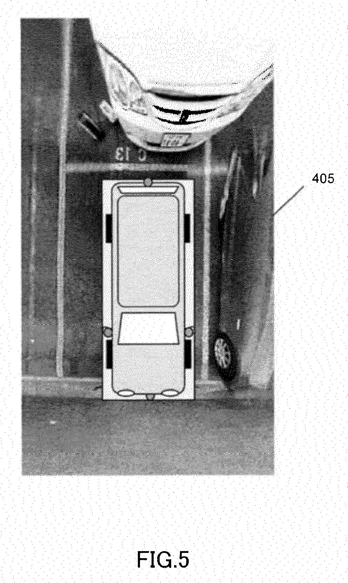

Overhead image synthesizing section 22 which is a synthesizing section performs signal processing of generating one output image by synthesizing a plurality of overhead images generated by overhead image converting section 21, and outputting this output image to display section 3. FIG.5 is an example of one output image (synthetic image) 405 generated from overhead images 401, 402, 403 and 404 in FIG.4.

Meanwhile, in FIG.4, overlapping areas 411a, 411c, 412a, 412d, 413b, 413c, 414b and 414d are areas (overlapping areas) in which two overhead images overlap. For example, area 411a of overhead image 401 corresponding to camera 11a on the side surface of the vehicle, and area 411c of overhead image 403 corresponding to camera 11c at the back of the vehicle overlap. Further, area 413c of overhead image 403 corresponding to camera 11c at the back of the vehicle, and area 413b of overhead image 402 corresponding to camera 11b on the side surface of the vehicle overlap. Further, area 414b of overhead image 402 corresponding to camera 11b on the side surface of the vehicle, and area 414d of overhead image 404 corresponding to camera 11d at the front of the vehicle overlap. Further, area 412d of overhead image 404 corresponding to camera 11d at the front of the vehicle, and area 412a of overhead image 401 corresponding to camera 11a on the side surface of the vehicle overlap. The overlapping areas are synthesized by assigning weights to and adding the respective overhead images. The weight applied to each overhead image can be obtained by referring to blend ratio table 24 (described below).

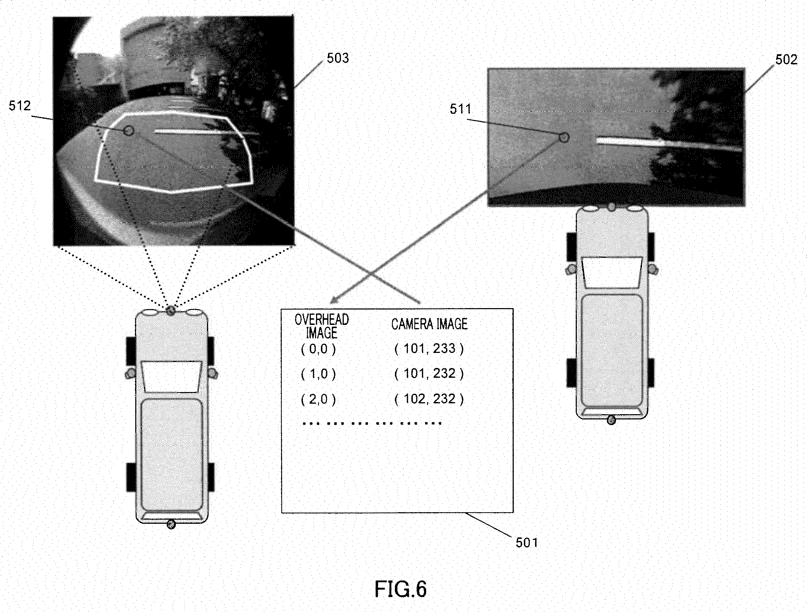

Mapping table 23 is a table which associates correspondences between camera images and overhead images. The pixel coordinate of each camera image and the pixel coordinate of a corresponding overhead image are described as a pair. FIG.6 is a view illustrating a method of acquiring a pixel coordinate of a camera image referring to the mapping table. In FIG.6, mapping table 501 associates the coordinate of overhead image 502 and the coordinate of camera image 503 on a one-to-one basis. When coordinate 512 of camera image 503 associated with certain coordinate 511 of overhead image 502 needs to be learned, coordinate 511 is searched from a list of overhead image coordinates of mapping table 501 to acquire associated coordinate 512 of camera 503. With the present embodiment, mapping tables are created for a plurality of cameras, respectively. The mapping table is stored in, for example, a ROM or RAM to perform processing of generating a synthesized image at a high speed.

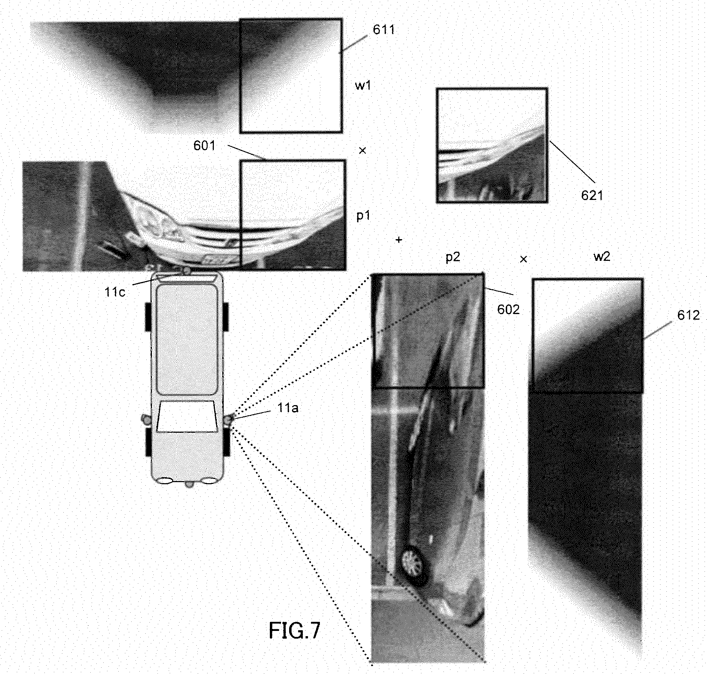

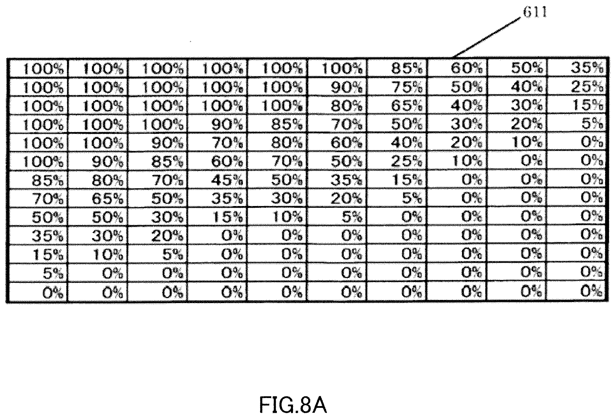

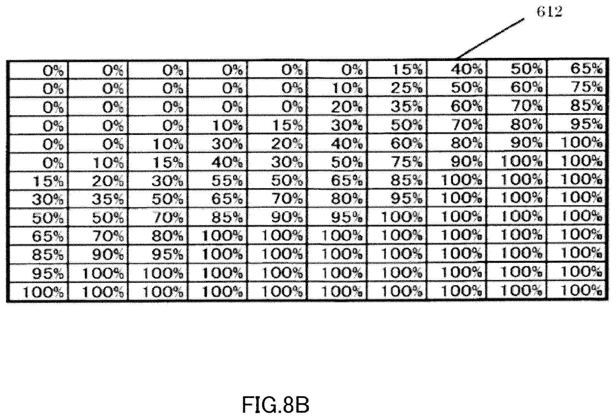

Blend ratio table 24 shows how many pixels of which overhead image are used to synthesize one output image by overlapping two overhead images. FIG.7 is an example of synthesizing overlapping areas of the two overhead images. In FIG.7, the overlapping areas are synthesized by calculating the brightness of each pixel according to equation 1. Synthetic image 621 is obtained by synthesizing overhead images 601 and 602. Meanwhile, an example of using a weight table will be described as a method of synthesizing overlapping areas using the blend ratio table. When the overlapping areas are synthesized, weights applied to overhead images 601 and 602 are obtained by referring to weight tables 611 and 612 having the same size as the overlapping areas. In addition, in FIG.7, the degree of the weight of each pixel determined in weight tables 611 and 612 is represented by shading of color (that is, a greater weight is represented by a deep color). FIG.8A and FIG.8B are examples representing weight tables 611 and 612 in FIG.7 using numerical values. Individual values in weight tables in FIG.8A and FIG.8B are associated with each pixel, and a weight is set in the range equal to or more than 0% and equal to or less than 100%. Further, the relationship of equation 2 holds for the weight of each pixel.

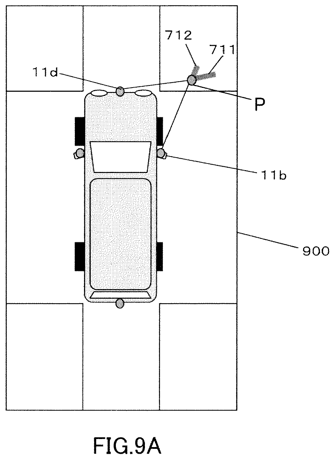

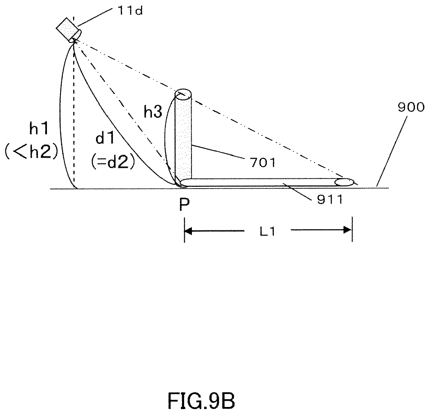

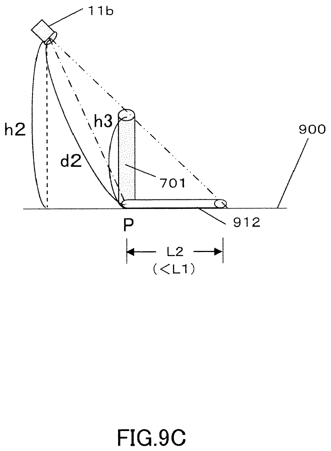

Hereinafter, a case as to synthesis of overhead images will be described as an example with reference to FIG. 9A, FIG.9B and FIG.9C where, assuming that there is a three-dimensional object at a point at a front right of the vehicle, overlapping areas including the surrounding of the three-dimensional object.

With the present embodiment, camera 11d at the front of the vehicle is set at a position at a height h1 from the ground, and camera 11b on the right of the vehicle is set at a position at a height h2 (>h1) from the ground. When cameras 11b and 11d capture images of three-dimensional object 701 at a height h3 (<h1) positioned at a point P in vehicle surrounding area 900, three-dimensional object 701 appears as projected three-dimensional objects 911 and 912 projected on the ground in a state stretched in respective projection directions. With this example, camera 11d is set at a position lower than camera 11b, and therefore, projected three-dimensional object 911 in a captured image of camera 11d is more stretched than three-dimensional object 912 in a captured image of camera 11b (L1>L2). Although the length of the three-dimensional object appearing on an image changes when camera images are converted into overhead images by view point conversion, the relationship between the lengths of projected three-dimensional objects 911 and 912 before conversion is generally the same as the relationship between the lengths of projected three-dimensional objects 711 and 712 after conversion. That is, distortion of three-dimensional object 701 is more significant in an overhead image corresponding to camera 11d set at a lower position.

With the conventional example disclosed in Patent Literature 2, when the distances d1 and d2 between cameras 11d and 11b and the point P are given, the weights w1 and w2 of the overhead image at the point P are given according to following equations 3 and 4. In addition, the distance d1 can be calculated based on the world coordinate position of camera 11d, a height from the ground of camera 11d and the world coordinate position of the point P. The same applies to the distance d2.

$$w1 = d2/(d1 + d2) \ldots \text{(Equation 3)}$$

$$w2 = d1/(d1 + d2) \ldots \text{(Equation 4)}$$

With this conventional example, the weights w1 and w2 are applied according to above equations 3 and 4, so that pixels of one of two overhead images closer to the camera are preferentially utilized. That is, with this conventional example, weights are derived from the distance. Therefore, when the distances d1 and d2 between cameras 11d and 11b and the point P are equal, there is a problem. Generally, the positions to attach cameras 11b and 11d are actually different, therefore, even when the distances d1 and d2 are the same, the heights h1 and h2 are different. Hence, as described above, the sizes (stretches) of projected three-dimensional objects 711 and 712 produced from three-dimensional object 701 positioned at the position P are different. Meanwhile, when a synthetic image of overlapping areas is generated, an image of camera 11b of the least stretch, that is, at a higher position, is preferentially used to reduce distortion in the output image. However, with the conventional example, the weights w1 and w2 are derived from the equal distances d1 and d2, and therefore become equal. When the weights w1 and w2 of overhead images are determined based on the distances d1 and d2 from cameras 11d and 11b in this way, distortion (stretch) in the projection direction of three-dimensional object 701 cannot be taken into account and pixels corresponding to the point P in the two respective overhead images are synthesized using the same weights w1 and w2.

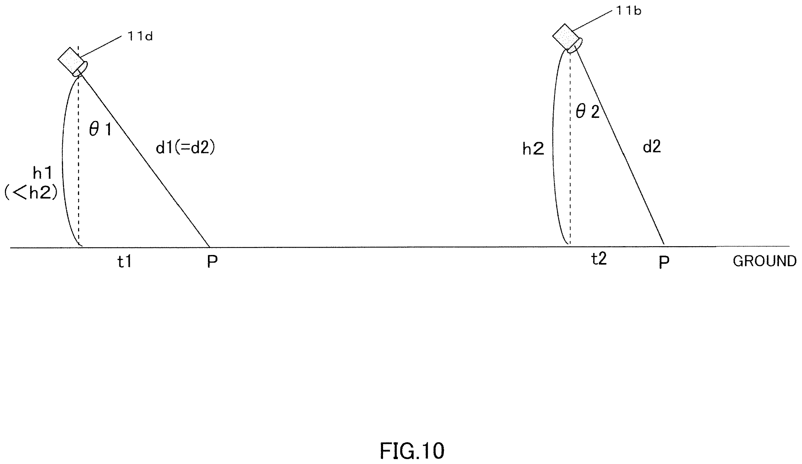

By contrast with this, with the present embodiment, by taking into account the positions to attach cameras, more particularly, the heights to attach the cameras, weighting is performed which reduces distortion in the projection direction of the three-dimensional object. The weight setting method according to the present embodiment will be described using FIG.10. In FIG.10, the distance between a point at which the perpendicular line drawn in the direction of the ground from camera 11d positioned at the height h1 crosses the ground, and the point P is t1, and the distance between a point at which the perpendicular line drawn in the direction of the ground from camera 11b positioned at the height h2 crosses the ground, and the point P is t2. The overhead image is projected on the ground with the present embodiment, and preferably looks directly below as much as possible from a virtual view point. Hence, with the proposed weight setting method, instead of the distances d1 and d2 between cameras 11d and 11b and the point P, angles θ1 and θ2 at which cameras 11d and 11b look down on the point P are focused upon. That is, overhead images corresponding to cameras which look down on the point P at relatively sharp angles are relatively closer to images which look down directly below, and therefore weights for these overhead images are set higher. The weighting which reflects these are expressed by following equations 5, 6, 7 and 8.

$$w1 = \theta2/(\theta1 + \theta2) \ldots \text{(Equation 5)}$$

$$w2 = \theta1/(\theta1 + \theta2) \ldots \text{(Equation 6)}$$

$$\theta1 = \arctan(t1/h1) \ldots \text{(Equation 7)}$$

$$\theta2 = \arctan(t2/h2) \ldots \text{(Equation 8)}$$

If θ1=θ2 holds, distortion (stretch in the projection direction) of the three-dimensional object at the point P becomes the same length, so that the weights w1 and w2 at the point P are the same. With this example, $\theta 1 > \theta 2$ holds, and the point (point P) corresponding to the pixels of synthesis targets is at an equal distance (d1=d2) from cameras 11b and 11d, and the weight w2 of the overhead image corresponding to camera 11b at a position at which the angle to look down on the point P is sharper becomes greater. That is, when the pixels corresponding to the point P are synthesized, pixels of the overhead images corresponding to camera 11b set at a high position and having a little distortion of a three-dimensional object are preferentially utilized.

In addition, although only the point P is focused upon with the above example, conditions (such as distance and angle) at the point near the point P resemble the conditions at the point P, so that, even when the point near the point P is focused upon, it is possible to lead to the same conclusion as the case where the point P is focused upon.

That is, of projected three-dimensional objects 711 and 712 illustrated in FIG.9A, projected three-dimensional object 711 of great distortion corresponding to camera 11d at a relatively low position is significantly influenced by the overhead image corresponding to other camera 11b, and, as a result, becomes less distinctive in the synthetic image. By contrast with this, projected three-dimensional object 712 which corresponds to camera 11b at a relatively high position and therefore has a little distortion is not significantly influenced by the overhead image corresponding to other camera 11d, and, as a result, becomes more distinctive than projected three-dimensional object 711 in the synthetic image. Consequently, with the present embodiment, it is possible to provide a synthetic image of reduced distortion in overlapping areas.

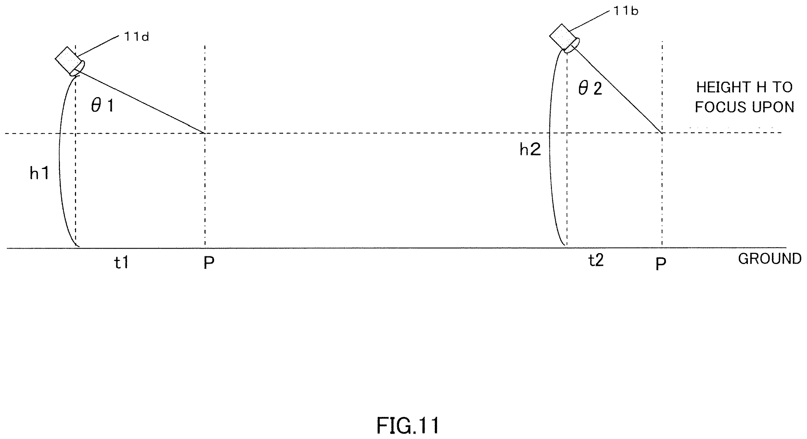

Next, a case will be described where the height to focus upon most is set as a parameter depending on reduction in distortion of which three-dimensional object at what height is focused upon, in the weight setting method according to the present embodiment. In FIG.11, the positions of cameras 11d and 11b are represented by the heights h1 and h2 from the ground, and distances between a point at which the perpendicular lines drawn from cameras 11d and 11b toward the direction of the ground cross the ground, and the point P are t1 and t2. Meanwhile, a height H at which distortion needs to be reduced is additionally set as a parameter. When suppression of distortion (stretch in the projection direction) of an object at the height H to be focused on at the point P is taken into account, the angles at which cameras 11d and 11b look down on the point P are formulated according to following equations 9 and 10.

$$\theta 1 = \arctan(t1/(h1 - H)) \ldots \text{(Equation 9)}$$

$$\theta 2 = \arctan(t2/(h2 - H)) \ldots \text{(Equation 10)}$$

Using $\theta 1$ and $\theta 2$, weighting at the point P is expressed according to equations 5 and 6.

Although a setting of a height H to actually focus upon depends on a height to attach the camera, the height is set to about 50 to 80 cm. This height needs to be set lower than the position to attach the camera. Further, the height H to focus upon is made constant irrespectively of whether or not there is an object at the point P to calculate the weights. That is, weight setting processing according to the present embodiment does not need to detect an object, and is uniformly performed based on the predetermined height H irrespectively of whether or not there is an object. When there is no object, that is, when the ground is displayed in an overhead image, the ground at the same position in the overlapping areas is captured, and therefore weighting which assumes the height H to focus upon does not have a negative influence on a synthetic image.

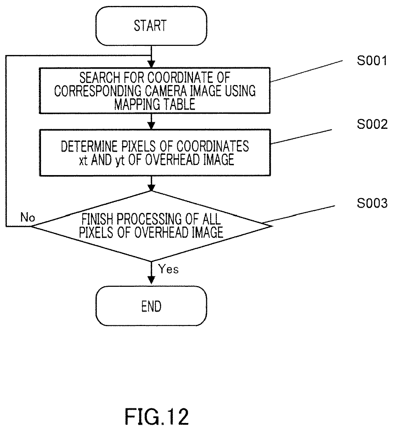

FIG.12 is a flowchart illustrating an operation example of overhead image converting section 21 which generates overhead images at a timing when an input of a camera image is determined.

In step S001, mapping table 23 will be referred to acquire coordinates of a camera image corresponding to coordinates xt and yt of an overhead image. Mapping table 23 has a list of coordinates of camera images associated with coordinates xt and yt of overhead images, so that it is possible to acquire coordinates xi and yi of the associated camera image.

In step S002, pixel values at coordinates xi and yi of the camera image is acquired to utilize these pixel values as pixel values at coordinates xt and yt of the overhead image.

In step S003, with processing of deciding whether or not all pixels required to generate overhead images are acquired, processings in step S001 and step S002 are repeated until all pixel values of overhead images are acquired.

The processing in FIG.12 is repeated until all overhead images at a certain timing are generated in overhead image converting section 21.

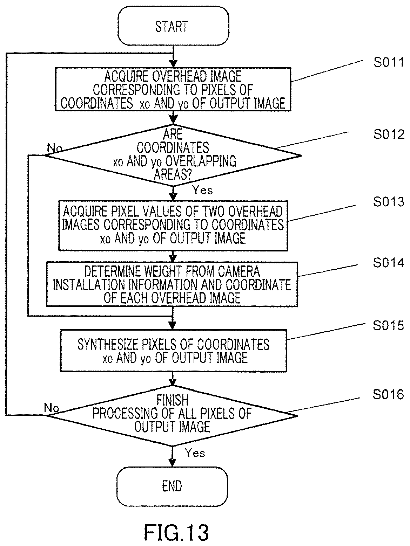

Next, FIG.13 is a flowchart illustrating an operation example of overhead image synthesizing section 22 which, at timings when a plurality of overhead images are generated, synthesizes these overhead images and generates an output image.

In step S011, an overhead image having the pixel values of coordinates xo and yo of the output image which is finally synthesized is selected.

In step S012, whether or not there is a plurality of overhead images for synthesizing pixels of coordinates xo and yo of the output image is decided, and, when there is one corresponding overhead image, the step proceeds to step S015. If there are two overhead images, it is decided that there are overlapping areas, and the step proceeds to step S013.

In S013, the pixel values of two overhead images corresponding to coordinates xo and yo of the output image are acquired.

In S014, a weight for synthesizing the pixel values of the overhead images acquired in step S013 is acquired from blend ratio table 24.

In step S015, the pixels of coordinates xo and yo of the output image are synthesized. When there are corresponding pixels in two overhead images, the overhead images are synthesized according to equation 1 based on the weight acquired in step S014. When there is only one overhead image, the pixels of coordinates xo and yo of this overhead image are used as is.

In step S016, with processing of deciding whether or not all pixel values required to generate an output image are acquired, processings in step S011 and step S015 are repeated until all pixel values are acquired.

By realizing synthesizing processing of the above output image at, for example, 30 frames per second, it is possible to realize proposed synthesis of a common movie.

According to this operation, the present invention can provide a vehicle surrounding monitoring apparatus which can synthesize images of little distortion in overlapping areas in which overhead images overlap.

(Embodiment 2)

Hereinafter, Embodiment 2 of the present invention will be described. The basic configuration of the vehicle surrounding monitoring apparatus according to the present embodiment is the same as in Embodiment 1, and therefore the detailed configuration will not be described.

The present embodiment differs from Embodiment 1 in utilizing a three-dimensional space model in processing of converting camera images into overhead images, and this difference will be mainly described.

A conventional three-dimensional space model is shown in, for example, FIG.28(c) of Patent Literature 3. This three-dimensional space model is an omni-directional curved model which is curved like a complete bowl shape and rises to surround the omni-direction of the vehicle in the world coordinate based on the vehicle.

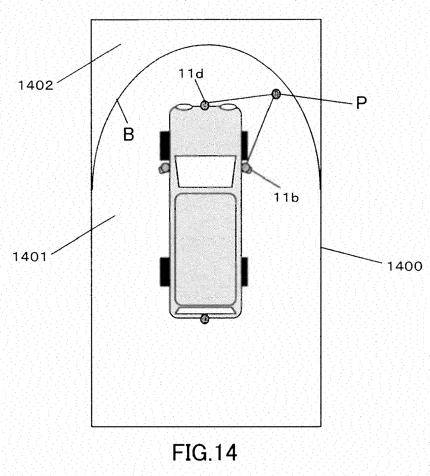

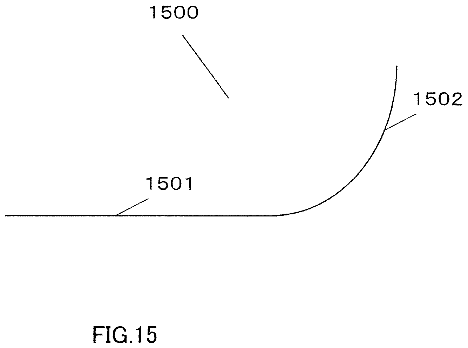

By contrast with this, with the present embodiment, as illustrated in FIG.14 and FIG.15, while the area on the back side of the vehicle is planar projection area 1401 in which the projection plane is a horizontal plane, the area on the front side of the vehicle is curved projection area 1402 in which the projection plane forms a bowl shape. Vehicle surrounding area 1400 is partitioned into planar projection area 1401 and curved projection area 1402 by boundary B. The pixels of camera images are mapped on horizontal projection plane 1501 of front curved model 1500 in planar projection area 1401, or mapped on bowl-shaped projection plane 1502 of front curved model 1500 in curved projection area 1402. That is, front curved model 1500 according to the present embodiment is defined to include only horizontal projection plane 1501 at the back of the vehicle and include bowl-shaped projection plane 1502 which is curved like a bowl shape and rises from horizontal projection plane 1501 at the front of the vehicle.

With the present embodiment using above front curved model 1500, processing of converting camera images into overhead images includes processing of mapping each camera image on front curved model 1500 and processing of converting the view point for each mapped image and performing projection again on the ground (horizontal plane).

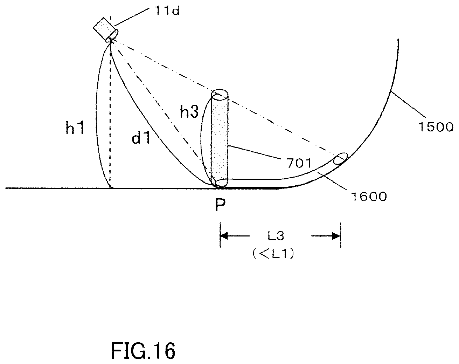

When camera 11d captures an image of an area including the point P at which three-dimensional object 701 is positioned, this camera image is mapped on front curved model 1500 as illustrated in FIG.16. With this example, as a result that a front end portion of three-dimensional object 701 is projected on the curved portion (bowl-shaped projection plane 1502 in FIG.15), a length L3 of projected three-dimensional object 1600 on front curved model 1500 is shorter than a length L1 of projected three-dimensional object 911 (FIG.9B) on a camera image. Consequently, it is possible to make a projected three-dimensional object (not illustrated) appearing in an overhead image generated from this mapping image according to the present embodiment, shorter than projected three-dimensional object 711 (FIG.9A) appearing in the overhead image generated directly from the camera image according to Embodiment 1.

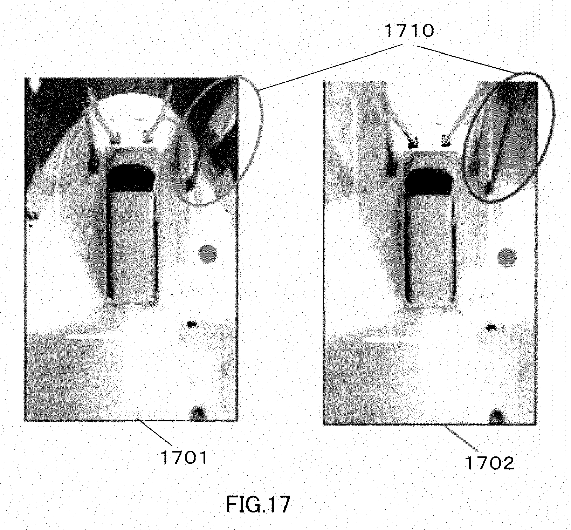

Consequently, with the present embodiment, it is possible to further reduce distortion of a three-dimensional object in overhead images of the front of the vehicle. Referring to FIG.17, in output image 1701 obtained by front curved surface projection as in the present embodiment, a stretch of three-dimensional object 1710 at the front of the vehicle is restricted and distortion is reduced compared to output image 1702 obtained by simple planar surface projection.

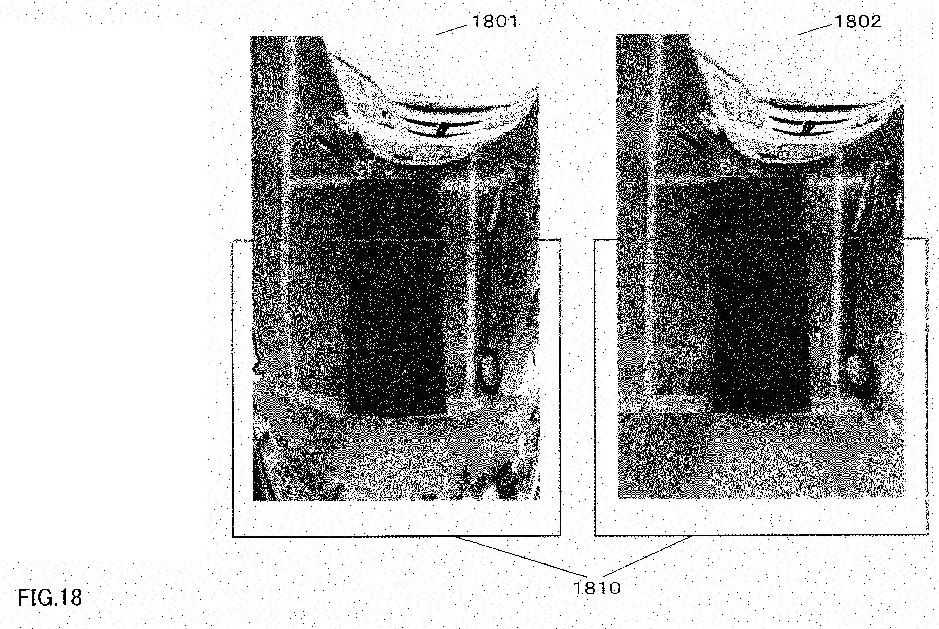

Further, referring to FIG.18, in output image 1801 obtained by front curved surface projection as in the present embodiment, the wide field of view is secured in vehicle rear area 1810 compared to output image 1802 obtained by simple planar surface projection.

Consequently, according to the present embodiment, an output image is formed at the back of the vehicle by planar surface projection which facilitates confirmation of the distance perspective, and an output image is formed at the front of the vehicle by curved surface projection which facilitates confirmation of the surrounding. Generally, a synthetic image is displayed when a vehicle is going backward to drive the vehicle in, for example, a parking place. Hence, at the back of the vehicle which is the traveling direction of the vehicle, it is more necessary to faithfully reproduce the positional relationship of the vehicle and object positioned nearby than to secure a wide field of view. By contrast with this, at the front of the vehicle or at the side of the vehicle which is not the traveling direction of the vehicle, the opposite applies. The present embodiment simultaneously satisfies these demands.

Embodiments of the present invention have been described above. The above embodiments can be variously changed and implemented. Further, the above embodiments can be adequately combined and implemented.

The disclosure of Japanese Patent Application No. 2009-124877, filed on May 25, 2009, including the specification, drawings and abstract, is incorporated herein by reference in its entirety.

Industrial Applicability

As described above, the vehicle surrounding monitoring apparatus according to the present invention is useful as, for example, a vehicle surrounding monitoring apparatus which is mounted on a vehicle, and which synthesizes a plurality of captured images around the vehicle and provides a synthetic image to, for example, a driver.

Reference Signs List

1 Image capturing section
2 Image processing section
3 Display section
11, 11a, 11b, 11c, 11d Camera
21 Overhead image converting section
22 Overhead image synthesizing section
23, 501 Mapping table
24 Blend ratio table
301, 302, 303, 304, 503 Camera image
401, 402, 403, 404, 502, 601, 602 Overhead image
405, 621 Synthetic image
411a, 411c Overlapping area
412a, 412d Overlapping area
413b, 413c Overlapping area
414b, 414d Overlapping area
511, 512 Coordinate
611, 612 Weight table
701 Three-dimensional object
710 Projection plane
711, 712, 911, 912, 1600 Projected three-dimensional object
900, 1400 Vehicle surrounding area
1401 Planar projection area
1402 Curved projection area
1500 Front curved model
1501 Horizontal projection plane
1502 Bowl-shaped projection plane

## Claims

**1.** A vehicle surrounding monitoring apparatus which is used with a plurality of image capturing sections (1) that capture images of an area around a vehicle, the vehicle surrounding monitoring apparatus comprising:

an acquiring section that acquires data showing a plurality of images captured by the plurality of image capturing sections (1)
**characterized in that**

a synthesizing section (22) that synthesizes an output image from a plurality of overhead images, an overhead image being an image which looks down on the vehicle from a virtual view point above is generated based on the acquired data,

wherein, in overlapping areas of different overhead images corresponding to different image capturing sections (1), the synthesizing section (22) weights pixels of the different overhead images with weights determined according to angles to look down from the respective different image capturing sections (1) on a point corresponding to the pixels, an angle being formed between a perpendicular line which extends toward a ground from a position to attach the different image capturing section (1) to the vehicle, and a straight line which extends toward the point from a position to attach the different image capturing section to the vehicle.

2. The vehicle surrounding monitoring apparatus according to claim 1, wherein the angle is an angle to look down from the different image capturing section on a position of the point on a ground.

3. The vehicle surrounding monitoring apparatus according to claim 1, wherein the angle is an angle at which the different image capturing section looks down on a position of the point at a predetermined height from a ground.

4. The vehicle surrounding monitoring apparatus according to claim 1, further comprising a converting section (21) that generates a plurality of overhead images based on the acquired data, wherein:

the converting section (21) maps a plurality of images shown in the acquired data, on a three-dimensional model, respectively to generate a plurality of overhead images; and

the three-dimensional space model is defined to include only a horizontal plane (1501) at a back of the vehicle and include a curved surface which is curved like a bowl-shape (1502) and rises from the horizontal plane (1501) at a front of the vehicle.

## Patentansprüche

1. Eine Fahrzeugumgebungsüberwachungsvorrichtung, welche eine Mehrzahl von Bilderfassungseinheiten (1) verwendet, die Bilder von dem Bereich um das Fahrzeug aufnehmen, die Fahrzeugumgebungsüberwachungsvorrichtung enthaltend:

eine Akquirierungseinheit, die Daten erlangt, die eine Mehrzahl von Bildern aufgenommen von der Mehrzahl von Bilderfassungseinheiten (1) zeigen

**gekennzeichnet dadurch, dass**

ein Syntheseabschnitt (22), welche ein Ausgabebild aus einer Mehrzahl von Überkopfbildern erzeugt, wobei ein Überkopfbild ein Bild darstellt, welches auf das Fahrzeug von einem virtuellen Blickpunkt herabschaut und aus den erlangten Daten erzeugt wird,

wobei in überlappenden Bereichen von verschiedenen mit unterschiedlichen Bilderfassungseinheiten (1) verbundenen Überkopfbildern, der Syntheseabschnitt (22) Pixel verschiedener Überkopfbilder wichtet mit Gewichten bestimmt aus den Winkeln, mit denen die entsprechenden unterschiedlichen Bilderfassungseinheiten (1) auf den dem Pixel entsprechenden Punkt herabschauen, wobei ein Winkel zwischen einer senkrechten Linie von der Befestigungsposition der unterschiedlichen Bilderfassungseinheit (1) an dem Fahrzeug zum Boden und einer Linie von der Befestigungsposition der unterschiedlichen Bilderfassungseinheit an dem Fahrzeug zu dem Punkt gebildet wird.

2. Die Fahrzeugumgebungsüberwachungsvorrichtung nach Anspruch 1, wobei der Winkel einen Winkel des Herabschauens von der unterschiedlichen Bilderfassungseinheit auf eine Position des Punktes auf dem Boden darstellt.

3. Die Fahrzeugumgebungsüberwachungsvorrichtung nach Anspruch 1, wobei der Winkel einen Winkel des Herabschauens von der unterschiedlichen Bilderfassungseinheit auf eine Position des Punktes in einer vorherbestimmten Höhe über dem Boden darstellt.

4. Die Fahrzeugumgebungsüberwachungsvorrichtung nach Anspruch 1, desweiteren einen Verarbeitungsabschnitt (21) enthaltend, welche eine Mehrzahl von Überkopfbildern unter Verwendung der erlangten Daten erzeugt, wobei:

der Verarbeitungsabschnitt (21) eine Mehrzahl der Bilder gezeigt in den erlangten Daten auf ein drei-dimensionales Modell zur Erzeugung einer Mehrzahl von Überkopfbildern aufträgt; und

das drei-dimensionale Modell durch eine horizontale Ebene (1501) auf der Rückseite des Fahrzeuges und eine gebogene Oberfläche, welche wie eine Schale (1502) gebogen und an der Vorderseite des Fahrzeuges von der horizontalen Ebene (1501) aus ansteigend ist, gekennzeichnet ist.

## Revendications

**1.** Appareil de surveillance des environs d'un véhicule utilisé en lien avec une pluralité de sections de capture d'image (1) qui capturent des images d'une zone autour d'un véhicule, l'appareil de surveillance des environs d'un véhicule comprenant :

une section d'acquisition qui acquiert des données montrant une pluralité d'images capturées par la pluralité de sections de capture d'images (1),
**caractérisé en ce que**
une section de synthèse (22) qui synthétise une image délivrée en sortie à partir d'une pluralité d'images vues d'en haut, une image vue d'en haut, étant une image montrant le véhicule d'un point de vue virtuel situé au-dessus de celui-ci, est générée en se fondant sur les données acquises,
où, dans des zones superposées de différentes images vues d'en haut correspondant à différentes sections de capture d'image (1), la section de synthèse (22) pondère des pixels des différentes images vues d'en haut selon des pondérations déterminées en fonction d'angles auxquels les différentes sections de capture d'image respectives (1) regardent d'en haut un point correspondant aux pixels, un angle étant formé entre une ligne perpendiculaire qui s'étend vers le sol à partir d'une position de fixation des différentes sections de capture d'image (1) au véhicule et une ligne droite qui s'étend en direction du point à partir d'une position de fixation des différentes sections de capture d'image au véhicule.

**2.** Appareil de surveillance des environs d'un véhicule selon la revendication 1, où l'angle est un angle auquel les différentes sections de capture d'images regardent d'en haut une position du point sur le sol.

**3.** Appareil de surveillance des environs d'un véhicule selon la revendication 1, où l'angle est un angle auquel les différentes sections de capture d'images regardent d'en haut une position du point à une hauteur prédéterminée par rapport au sol.

**4.** Appareil de surveillance des environs d'un véhicule selon la revendication 1, comprenant en outre une section de conversion (21) qui génère une pluralité d'images vues d'en haut à partir des données acquises, où :

la section de conversion (21) représente une pluralité d'images montrées dans les données acquises dans un modèle tridimensionnel, pour générer respectivement une pluralité d'images vues d'en haut ; et
le modèle d'espace tridimensionnel est défini de manière à inclure uniquement un plan horizontal (1501) à l'arrière du véhicule et inclure une surface courbée en forme de bol (1502) et qui s'élève à partir du plan horizontal (1501) à l'avant du véhicule.

2 IMAGE PROCESSING SECTION
24
BLEND RATIO TABLE
23
MAPPING TABLE
OVERHEAD IMAGE SYNTHESIZING SECTION
22
OVERHEAD IMAGE CONVERTING SECTION
21
3
DISPLAY SECTION
CAMERA 1
CAMERA 2
CAMERA N
11
1 IMAGE CAPTURING SECTION

FIG.1

11a
11b
11c
11d

FIG.2

301
302
303
304
11a
11b
11c
11d

FIG.3

401
411a
412a
411c
412d
11d
11a
403
11c
11b
413c
414d
413b
414b
402
404

FIG.4

405

FIG.5

502
511
501
503
512
OVERHEAD IMAGE
CAMERA IMAGE
( 0,0 )
( 101, 233 )
( 1,0 )
( 101, 232 )
( 2,0 )
( 102, 232 )

FIG.6

611
w1
×
p1
+
621
p2
602
×
w2
612
601
11c
11a

FIG.7

611

| 100% | 100% | 100% | 100% | 100% | 100% | 85% | 60% | 50% | 35% |
|---|---|---|---|---|---|---|---|---|---|
| 100% | 100% | 100% | 100% | 100% | 90% | 75% | 50% | 40% | 25% |
| 100% | 100% | 100% | 100% | 100% | 80% | 65% | 40% | 30% | 15% |
| 100% | 100% | 100% | 90% | 85% | 70% | 50% | 30% | 20% | 5% |
| 100% | 100% | 90% | 70% | 80% | 60% | 40% | 20% | 10% | 0% |
| 100% | 90% | 85% | 60% | 70% | 50% | 25% | 10% | 0% | 0% |
| 85% | 80% | 70% | 45% | 50% | 35% | 15% | 0% | 0% | 0% |
| 70% | 65% | 50% | 35% | 30% | 20% | 5% | 0% | 0% | 0% |
| 50% | 50% | 30% | 15% | 10% | 5% | 0% | 0% | 0% | 0% |
| 35% | 30% | 20% | 0% | 0% | 0% | 0% | 0% | 0% | 0% |
| 15% | 10% | 5% | 0% | 0% | 0% | 0% | 0% | 0% | 0% |
| 5% | 0% | 0% | 0% | 0% | 0% | 0% | 0% | 0% | 0% |
| 0% | 0% | 0% | 0% | 0% | 0% | 0% | 0% | 0% | 0% |

FIG.8A

612

| 0% | 0% | 0% | 0% | 0% | 0% | 15% | 40% | 50% | 65% |
|---|---|---|---|---|---|---|---|---|---|
| 0% | 0% | 0% | 0% | 0% | 10% | 25% | 50% | 60% | 75% |
| 0% | 0% | 0% | 0% | 0% | 20% | 35% | 60% | 70% | 85% |
| 0% | 0% | 0% | 10% | 15% | 30% | 50% | 70% | 80% | 95% |
| 0% | 0% | 10% | 30% | 20% | 40% | 60% | 80% | 90% | 100% |
| 0% | 10% | 15% | 40% | 30% | 50% | 75% | 90% | 100% | 100% |
| 15% | 20% | 30% | 55% | 50% | 65% | 85% | 100% | 100% | 100% |
| 30% | 35% | 50% | 65% | 70% | 80% | 95% | 100% | 100% | 100% |
| 50% | 50% | 70% | 85% | 90% | 95% | 100% | 100% | 100% | 100% |
| 65% | 70% | 80% | 100% | 100% | 100% | 100% | 100% | 100% | 100% |
| 85% | 90% | 95% | 100% | 100% | 100% | 100% | 100% | 100% | 100% |
| 95% | 100% | 100% | 100% | 100% | 100% | 100% | 100% | 100% | 100% |
| 100% | 100% | 100% | 100% | 100% | 100% | 100% | 100% | 100% | 100% |

FIG.8B

900
11b
P
711
712
11d

FIG.9A

900
911
701
L1
P
h3
11d
d1
(=d2)
h1
(<h2)

FIG.9B

900
912
701
11b
h3
d2
h2
P
L2
(<L1)

FIG.9C

GROUND
P
d2
11b
θ2
t2
h2
P
d1(=d2)
11d
θ1
t1
h1
(<h2)


FIG.10

HEIGHT H TO FOCUS UPON
GROUND
11b
θ2
h2
t2
P
11d
θ1
h1
t1
P

FIG.11

START
SEARCH FOR COORDINATE OF CORRESPONDING CAMERA IMAGE USING MAPPING TABLE
S001
DETERMINE PIXELS OF COORDINATES xt AND yt OF OVERHEAD IMAGE
S002
FINISH PROCESSING OF ALL PIXELS OF OVERHEAD IMAGE
S003
Yes
No
END

FIG.12

START
ACQUIRE OVERHEAD IMAGE CORRESPONDING TO PIXELS OF COORDINATES xo AND yo OF OUTPUT IMAGE
S011
ARE COORDINATES xo AND yo OVERLAPPING AREAS?
S012
Yes
No
ACQUIRE PIXEL VALUES OF TWO OVERHEAD IMAGES CORRESPONDING TO COORDINATES xo AND yo OF OUTPUT IMAGE
S013
DETERMINE WEIGHT FROM CAMERA INSTALLATION INFORMATION AND COORDINATE OF EACH OVERHEAD IMAGE
S014
SYNTHESIZE PIXELS OF COORDINATES xo AND yo OF OUTPUT IMAGE
S015
FINISH PROCESSING OF ALL PIXELS OF OUTPUT IMAGE
S016
Yes
No
END

FIG.13

1400
P
11b
11d
B
1402
1401

FIG.14

1502
1500
1501

FIG.15

1500
1600
701
L3
(<L1)
P
h3
d1
h1
11d

FIG.16

1710
1702
1701

FIG.17

1802
1801
1810

FIG.18

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005167309 A
- JP 2007274377 A
- JP 3286306 B
- JP 2009124877 A


### Non-patent literature cited in the description


- **GAO YINGHUI et al.** A stitching algorithm of remote sensing images from aviation swaying camera. *Optomechatronic Micro/Nano Devices and Components III, Proc. of SPIE,* 2005, vol. 5985, 59852L
- **RAN SONG et al.** Fast Mosaic of High-Resolution Multiple-View Images of Surfaces from Architectural and Heritage Structures. *International Conference on Automation and Logistics, Proc. of the IEEE,* 2007
- **R. SZELSKI.** Video mosaics for virtual environments. *IEEE Computer Graphics and Applications,* 1996
- **C.-W. LIN et al.** Realtime object extraction and tracking with an active camera using image mosaics. *Proc. of the 2003 IEEE Radar Conference,* 2003